# EUROPEAN PATENT SPECIFICATION

(11) **EP 1 276 382 B1**
(45) Date of publication and mention of the grant of the patent: **24.01.2007**
(21) Application number: 01916948.1
(22) Date of filing: 04.04.2001
(51) Int. Cl.: A22C 21/00

(54) **METHOD AND APPARATUS FOR SUSPENSION OF SLAUGHTERED ANIMALS, IN PARTICULAR BROILERS**
VERFAHREN UND VORRICHTUNG ZUM AUFHÄNGEN VON SCHLACHTTIEREN, INSBESONDERE VON GEFLÜGEL
PROCEDE ET APPAREIL DE SUSPENSION D'ANIMAUX D'ABATTAGE, NOTAMMENT DE POULETS

(30) Priority: 19.04.2000 DK 200000668
(43) Date of publication of application: 22.01.2003
(73) Proprietor: Linco Food Systems A/S, 8380 Trige (DK)
(72) Inventor: KVORNING, Keld, DK-8963 Auning (DK)
(74) Representative: Gregersen, Niels Henrik
(86) International application number: PCT/DK2001/000225
(87) International publication number: WO 2001/078516

(56) References cited:
- WO-A1-00/18245
- US-A- 4 574 428
- US-A- 4 791 704

## Description

The present invention concerns a method for suspending poultry to be slaughtered, particularly broilers, and of the kind indicated in the preamble of claim 1.

Suspension of poultry to be slaughtered, particularly live broilers, e.g. at arrival to a poultry slaughtering house, in shackles of a slaughtering line is a heavy and monotonous work that may be very hard, both physically and psychically. In connection with the work with suspending poultry, there may occur serious work environment problems as the hard and monotonous work is known to cause load damages of the arms and the back.

DE-A1-30 48 342 discloses a method and an apparatus for automatic suspension of poultry, e.g. broilers in shackles of a conveyor chain. The broiler are guided in a controlled fashion singly down a slide-way to an endless conveyor consisting of an elongate circle of trays in such a way that the broilers are already directed in one way with the legs or leg pieces facing rearwards so that the broilers are automatically disposed on respective trays with the legs projecting out from the side of the tray facing outward toward the periphery of the tray conveyor. The shackles of the conveyor chain runs along one side of the tray conveyor with the same mutual distance and speed as the trays so that the legs of the broilers are automatically inserted into the shackles of the conveyor chain and is transferred to this. At the side where the broilers are moved into the trays, these have a spatial orientation so that the trays extend inclining inwardly and downwardly, i.e. the legs of the broilers are pointing outward and upward. At the opposite side where the broilers are transferred to the shackles of the conveyor chain, the trays have such a spatial orientation that the trays extend inclining outwardly and downwardly, i.e. the broiler legs are also pointing outward and downward.

US-A-5 108 345 discloses an apparatus and a method for mechanising the suspending of live poultry, e.g. broilers, in shackles of an overhead conveyor in a poultry processing plant. Live broilers are placed on a belt conveyor moving along the shackles. The operator grips the legs of the broilers on the belt conveyor and draws the broilers over onto another belt conveyor and places the legs of the broilers in special leg holders projecting up along the side of the belt conveyor in such a way that the legs project outside the belt conveyor which is running synchronously with the overhead conveyor, i.e. the leg holders and the shackles are going together. The laterally projecting legs of the broilers are subjected to a downwardly directed pressure by means of stationary guide rails simultaneously with the shackles on the overhead conveyor successively being moved upwards so that the projecting legs are inserted into the slaughtering shackles and are transferred to these when the guide rails terminate.

WO 00/18245 discloses a method and an apparatus for suspending animals to be slaughtered, particularly chickens, in transport shackles of an overhead conveyor, where the chickens, for example from water chiller via a belt conveyor, are delivered at the centre of a rotating distributing table surface, at which there are means arranged for successively pushing the chickens outward toward a rim area of said distributing table surface, along said rim area being provided with positions arranged each to accommodate one chicken placed and partly fixed in such a way that at least one leg of each chicken projects from the edge of the rim area so that at least one leg may be gripped by a transport shackle of said overhead conveyor which in a synchronised manner pass close to one or more of said positions along the rim area of the rotating distributing table surface.

On this background, the invention has the purpose of indicating an improved method for suspending poultry to be slaughtered, and which makes possible to achieve a very substantial relief of the heavy and monotonous lifting work so that the risk of load injuries may be reduced correspondingly. At the same time, a more secure transfer is achieved.

The method according to the invention is characterised in that personnel placed along the peripheral area fix the legs of the broilers in special retainer clips of the shackles of the overhead conveyor which run along a section of the peripheral area of the rotating distributing surface, and that the broilers subsequently are automatically transferred to slaughtering shackles of a slaughtering line.

By means of simple technical measures is thereby achieved a considerable relief from the physically and psychically hard and monotonous work with suspending broilers in conveyor shackles as the personnel may stand or sit in a good work position and only assist with pushing or sliding the broilers into position and fixing them in the positions along the peripheral area of the rotating distributing surface, i.e. the personnel completely avoid lifting the broilers.

Preferably when the broilers leave the distributing surface, e.g. via a downward directed slide-way, are guided to vertical, hanging position as the retainer clips are arranged to assume a vertical as well as horizontal position, and that the retainer clips are subsequently and automatically released when the broilers, preferably via an intermediate wheel, are automatically transferred to the slaughtering shackles of the slaughtering line.

According to the invention, it may be further advantageous that the legs of the broilers by transfer from intermediate wheel to the slaughtering line may actively be pushed into the slaughtering shackles when these are passing the transfer position.

By the method according to the invention, there may suitably that use is made of a stationary, e.g. sheet formed, spiral for successively leading and pushing the broilers outward against the peripheral area of the distributing area of the circular, rotating distributing surface.

The method according to the invention may advantageously be performed in such a way that the legs of the broilers, preferably in connection with the transfer from the intermediate wheel to the subsequent processing line, e.g. a slaughtering line, are pushed downward into the slaughtering shackle.

Alternatively for increasing capacity, by the method according to the invention an elongate, rotating distributing surface (trunk conveyor) with central, stationary means arranged for successively leading and pushing the broilers outward toward the peripheral area of the distributing surface is used. In connection with suspending live broilers, for inactivating the broilers it may also be suitable that the elongate distributing surface is darkened at least at the end where the broilers are supplied via the belt conveyor.

The invention also concerns an apparatus for suspending poultry, particularly broilers, according to the inventive method and comprising a rotating distributing surface with a central receiving position for preferably stunned broilers, which are successively supplied via a belt conveyor, means adapted for successively pushing broilers outward toward a peripheral area of the distributing surface, said distribution surface comprising positions along the peripheral area being adapted for receiving broilers in such a way that they may be placed with the breast side downward and with their legs projecting out from the edge of the peripheral area, said apparatus being characterised in comprising special retainer clips arranged on shackles of an overhead conveyor, at least a part of which in a synchronised way is arranged to closely pass said positions along the peripheral area of the rotating distributing surface for allowing manual fixing of the legs of said broilers in said retainer clips, and that said overhead conveyor is adapted to interact with an intermediate wheel of an transfer unit for automatic transfer of the broilers to the slaughtering shackles of a slaughtering line.

Preferably, in the apparatus according to the invention, said retainer clips are hinge connected with the shackles of the overhead conveyor in such a manner that the retainer clips may assume a vertical position for fixing the legs of broilers lying in a horizontal position for fixing the legs of broilers hanging vertically down from the overhead conveyor for subsequent automatic transfer via said intermediate wheel to the shackles of said slaughtering lines as there are means for automatic release of the retainer clips in connection with the transfer. Hereby, it becomes possible automatically to transfer broilers with feet, namely live, preferably stunned, broilers to the shackles of a subsequent slaughtering line as the intermediate wheel in practice consists of a horizontal intermediate wheel with a large number of edge recesses which along about half of the circumference of the intermediate wheel is blocked by means of a curved guide strip so that the feet of the broilers are held fixed along the guide strip and are released for falling down into slaughtering shackles at the termination of the guide strip.

Suitably the apparatus according to the invention is designed so that the means for successively pushing the broilers outward toward the peripheral area of the rotating distributing surface are constituted by a stationary, preferably sheet formed, spiral, the centre of which is disposed approximately at the central position for receiving the broilers.

The apparatus according to the invention may further be designed so that along its periphery, the intermediate wheel comprises segments with outwardly open recesses for temporary accommodation of the broiler legs and means arranged for actively pushing the legs of the broilers from the intermediate wheel to the shackles of the slaughtering line in a coordinated way, and that, preferably in connection with the intermediate wheel there is a pressing arrangement in connection with the intermediate wheel with the purpose of ensuring that the broiler legs are disposed correctly in position at the bottom of the slaughtering shackle.

The invention is explained in more detail in the following in connection with the drawing on which:
- Fig. 1: shows a view from above of an embodiment of an apparatus with a circular distributing surface for use in performing the method according to the invention,
- Fig. 2: shows a view from above of a second embodiment of an apparatus with longitudinal distributing surface for use in performing the method according to the invention,
- Fig. 3: shows a side view, partly in section, through the peripheral area of the distributing area by an apparatus according to the invention with legs of a broiler fixed in special retainer clips of an overhead conveyor, the course of which partly envelopes the peripheral area,
- Fig. 4: shows a side sectional view through a link of said overhead conveyor with the special retainer clips which as shown may be pivoted down to horizontal position,
- Fig. 5: shows a rear view of the link shown in Fig. 3 of the overhead conveyor,
- Fig. 6: shows a top view of the link shown in Fig. 3 of the overhead conveyor,
- Fig. 7: shows a sectional view of a preferred embodiment of an intermediate wheel for a transfer device for use in the method according to the invention,
- Fig. 8: shows a schematic top view of the intermediate wheel shown in Fig. 7 with activated curve wheel for controlling special insertion means for the transfer device by an apparatus according to the invention,
- Fig. 9: shows a schematic top view of the intermediate wheel shown in Fig. 8 with not activated curve wheel,
- Fig. 10: shows a top view of a right turn steering wheel with pressing means for securing the position of the broiler legs in the shackles,
- Fig. 11: shows a top view of a left turn steering wheel with depressing means for securing the position of the broiler legs in the shackles,
- Fig. 12: shows a front view and a side view, respectively, of the depressing means in the position where they are inserted in the shackles for depressing the legs into the shackles, and
- Fig. 13: shows a front view and a side view, respectively, of the depressing means in the position where they are pressed down upon the legs in the shackles.

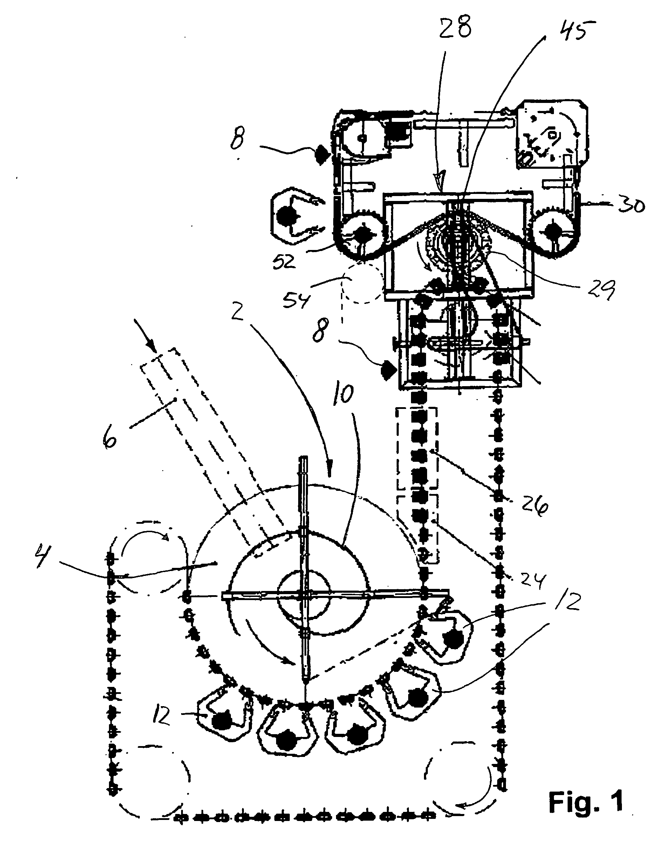

The suspending apparatus 2 shown in Fig. 1 comprises a mainly horizontal, circular distributing surface 4 which is continually rotated anticlockwise in the depicted example and which preferably is adjusted in height for standing personnel but which also can be adjusted in height for sitting personnel.

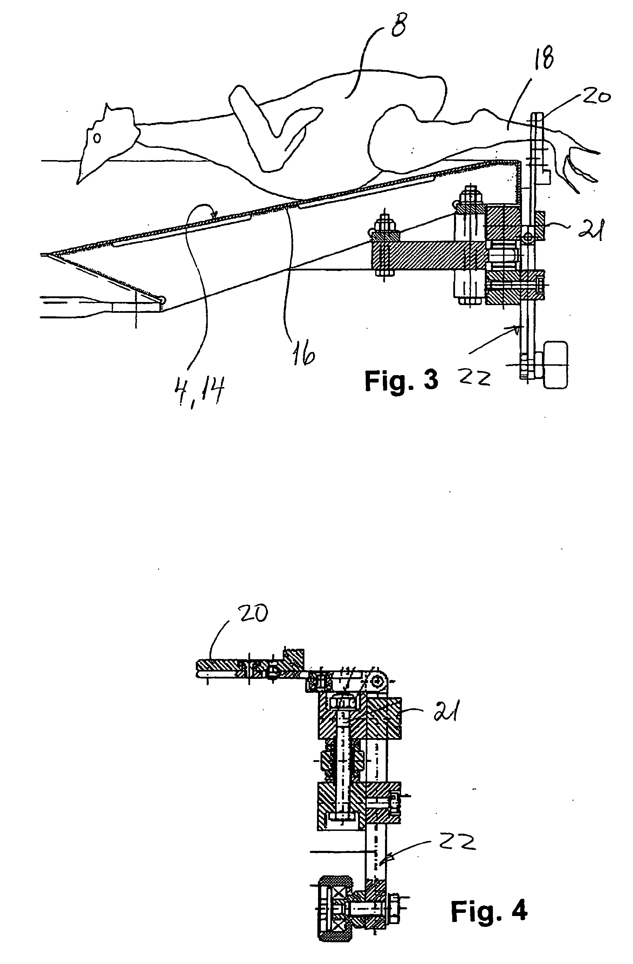

Via a belt conveyor 6, stunned animals to be slaughtered, preferably broilers 8 are supplied directly from reception, for example, and discharged at the centre of the distributing surface 4. Due to the rotation of the distributing surface, a stationary, for example formed of sheet material, spiral 10 provides for pushing the broilers 8 outward toward a peripheral area of the distributing surface 4 where standing or sitting personnel 12, without having to lift each broiler, may easily push or slide the broilers 8 into specially made positions 14 (Fig. 3) along the peripheral area of the distributing surface 4.

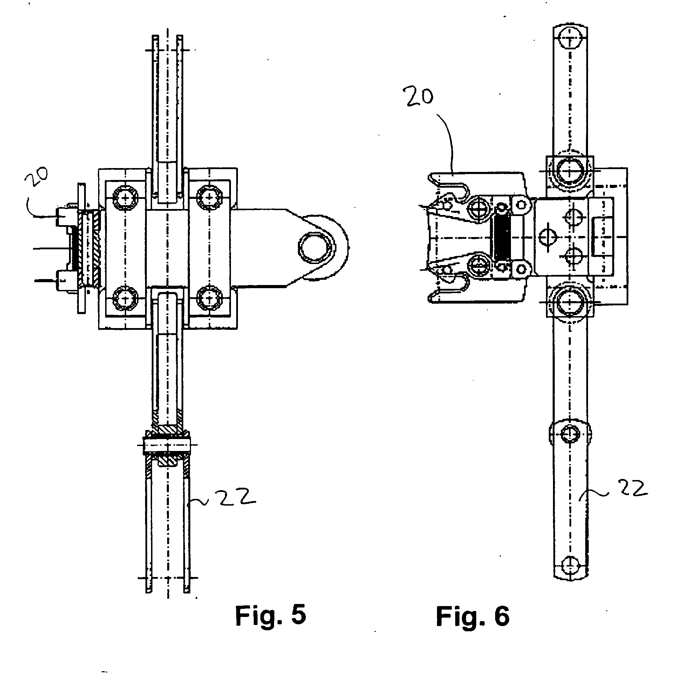

Each of the positions 14 are preferably provided with a fitting piece, which may be made of steel sheets or e.g. be moulded in plastic, and which preferably is arranged to accommodate the breast side of a broiler 8 in such a way that the legs of the broiler project outside the peripheral area or the periphery of the distributing surface 4. In practice, the peripheral area of the distributing surface 4 is constituted by an outer inclining surface 16 (Fig. 3) in the shape of a frustum of a cone on which the fitting pieces are mounted. Furthermore, in Fig. 3 is seen how the legs 18 of the broilers, which, as mentioned, project outside the peripheral area, become fixed in special retainer clips 20 by the respective links 21 of an overhead conveyor 22 while a part of this length run along the peripheral area or the periphery of the distributing surface. In Figs. 4 - 6 is seen more clearly how the retainer clips 20 are hinge connected to the links 21 of the overhead conveyor 22.

Immediately after the broilers 8 with legs fixed have left the distributing surface 4, the broilers are pivoted down via, for example, a downward sloping slide-way 24 to vertical, hanging position with heads downward in position 26 as the retainer clips 20 are simultaneously pivoted to horizontal position. Subsequently, the broilers 8 are transferred via special transfer device 28 with intermediate wheel 29 to slaughtering shackles 32 by a secondary overhead conveyor (slaughtering line) 30 as the retainer clips 20 at the inlet to the intermediate wheel 29 are automatically released simultaneously.

Hereby, as mentioned previously, it becomes possible to automatically transfer broilers with feet, namely alive, preferably stunned broilers, to a subsequent overhead conveyor 30 or slaughtering shackles of a slaughtering line, as the intermediate wheel 29 in practice consists of a horizontal wheel with a number of peripheral edge recesses that are open to the outside and which along the section of the circumference of the intermediate wheel, that is continuously located between receiving and delivering positions of the intermediate wheel, are blocked by means of a curved guide strip so that the feet of the broilers are kept fixed within the guide strip and are automatically released for falling down in the slaughtering shackles at the termination of the guide strip.

If the broilers 8, as mentioned previously, are not gas or electrically stunned already at arrival to the suspending apparatus 2 and the distributing surface 4, respectively, the broilers 8 could pass a stunning device at position 26 so that the broilers 8 are stunned when they subsequently are transferred to slaughtering shackles.

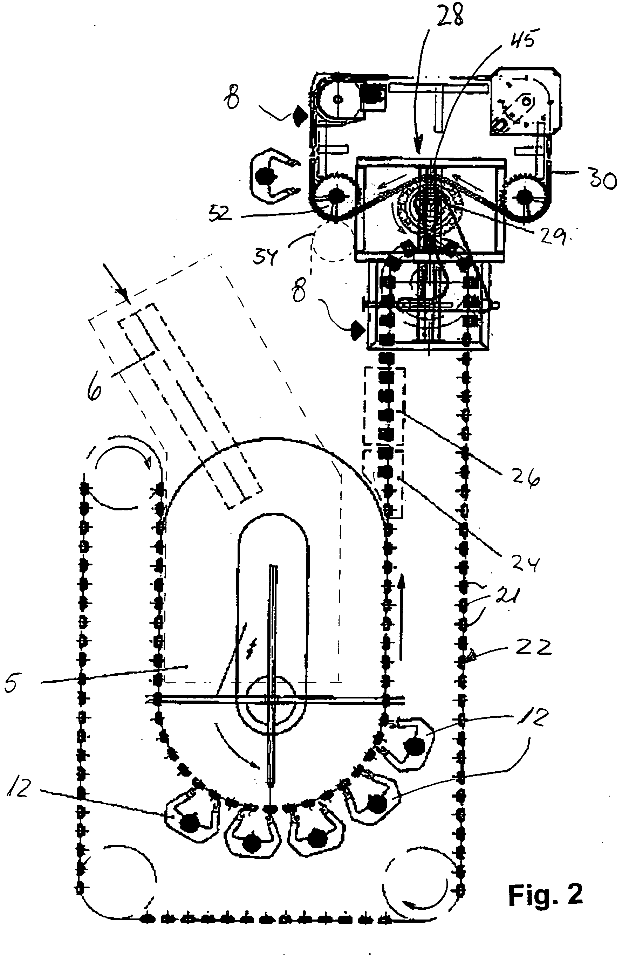

In Fig. 2 is shown how the distributing surface 5 consists of an elongate, rotating distributing surface (as a trunk conveyor) of which a front section and the supply belt conveyor 6, as indicated with punctuated line, is darkened so that the broilers 8 are calmed during supply to the distributing surface 5. The well-known fact that chickens may be calmed by darkening their living area is thus utilised as well as the fact that a chicken, which is laid on the breast, i.e. with the breast side down, tends to stay in this position, also if the legs of the broilers are fixed in the special retainer clips 20 moving along the peripheral area of the distributing surface 5.

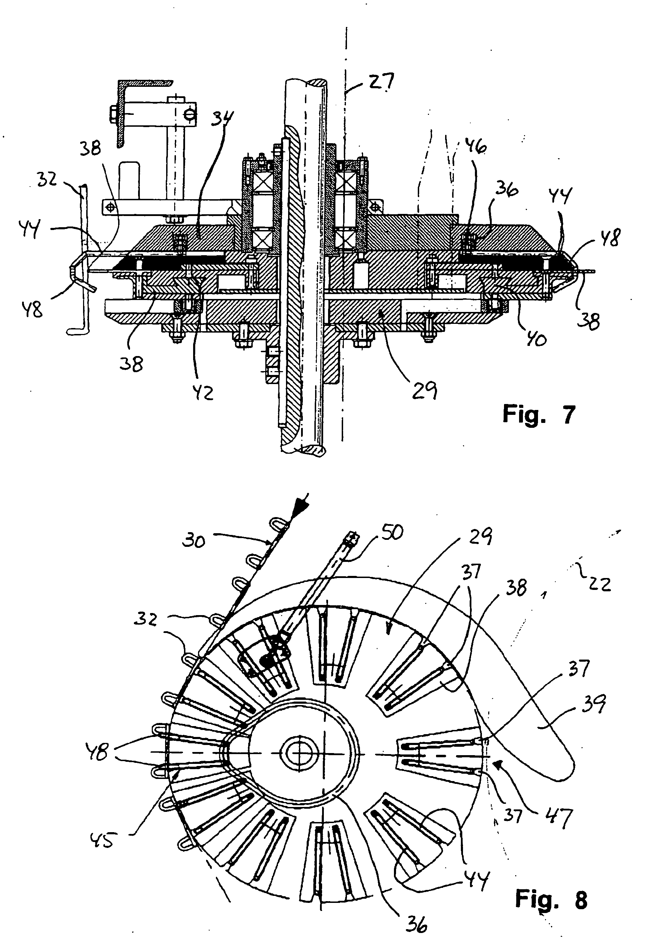

In connection with the intermediate wheel 29 there may, as shown in Fig. 7, be arranged a special push-out arrangement comprising an upper cam 34 being symmetrically suspended relative to the axis 27 of the intermediate wheel 29 and formed with a guide groove 36 at its underside. Along the circumference of the push-out arrangement is disposed a number of segments 38 that may be displaced along the circumference of the intermediate wheel 29 by means of dovetail guides 40 engaging a guide groove 42 with dovetail cross-section. Each of the segments 38 have two push-out rods 44, the radial position of which relative to the intermediate wheel 29 are controlled by guide pins 46 with bearings engaging the guide groove 36 at the underside of the cam 34. To be mentioned is that the pitch between the segments 38 varies from side to side. In the example shown, the pitch is 8" at the inlet side of the intermediate wheel 29 whereas the pitch is only 6" at the transfer position 45.

To the left side of Fig. 7 is seen a push-out rod 44 in activated position where an outer curved end part 48 of the push-out rod 44 is inserted into a slaughtering shackle 32 of the slaughtering line 30 with the purpose of actively moving the legs of a broiler from outwardly open recesses 37 in a segment 38 into the slaughtering shackle 32. In the right side of Fig. 7 is seen a push-out rod 44 in not activated position where the curved outer end 48 of the push-out rod 44 assumes a withdrawn position inside the recesses 37.

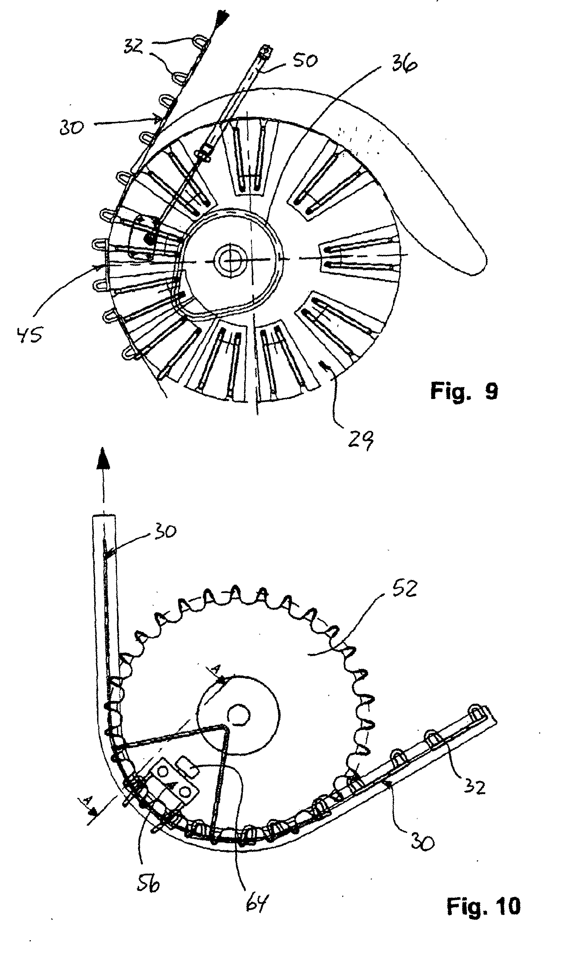

Figs. 8 and 9 show schematically how the cam 34 by means of an e.g. pneumatic cylinder 50 may be pivoted between an active position (Fig. 8) and an inactive position (Fig. 9). In Fig. 8, the cam 34 with guide groove 36 assumes its active position where the push-out rods 44 in the transfer position 45 may be inserted between the vertical shackles of a usual slaughtering shackle 32 of the slaughtering line 30. In Fig. 9, the cam 34 with the guide groove 36 assumes its inactive position where the push-out rods 44 in the transfer position 45 cannot be inserted into a passing slaughtering shackle 32 but remain withdrawn in the recesses 37 of the segments 38. In Fig. 8 is furthermore outlined the transfer position 47 from the conveyor 22 to the intermediate wheel 29 where the legs of the broilers may be guided into position in the recesses 37 by the segments 38 inter alia by means of a guide rail 39 as the retainer clips 20, as previously mentioned, are released simultaneously.

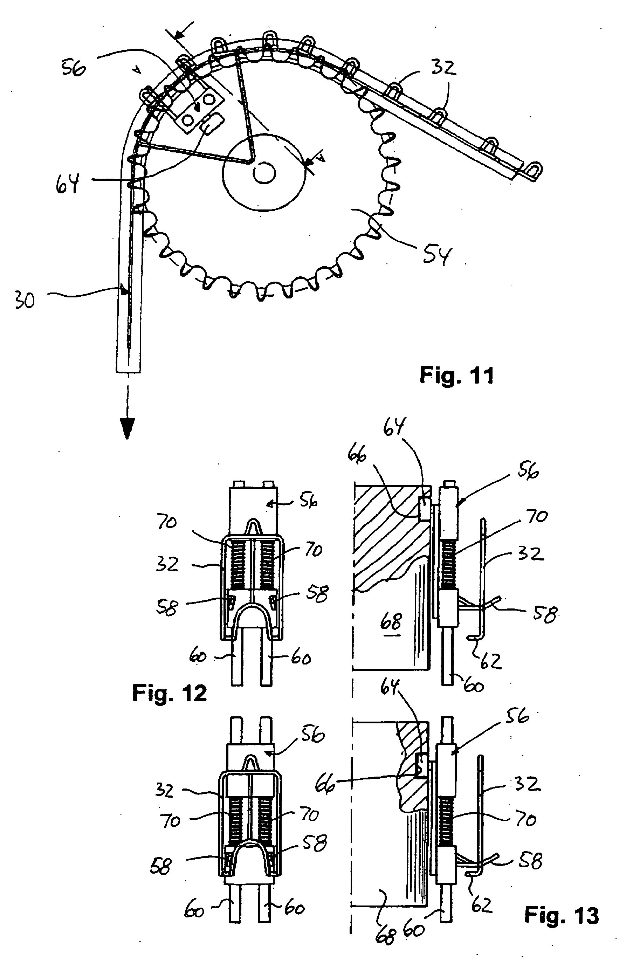

In Figs. 1 and 2 is shown that the slaughtering line 30 is guided to the right after the transfer position 45 rather quickly by means of a guide wheel 52 but as shown with punctuated line, the slaughtering line 30 might alternatively be guided to the left by means of a guide wheel 54. Figs. 10 and 11 show top views of a right guide wheel 52 and a left guide wheel 54 in connection with which are arranged a special depressing arrangement with a number of depressing segments 56 with depressing levers 58 which are arranged to be inserted into the slaughtering shackle 32 in a position above the legs of the broiler and from this position to be moved downward for ensuring that the legs of the broiler are correctly placed at the bottom of the slaughtering shackle 32.

Fig. 12 shows to the left a front view and to the right a side view of a depressing segment 56 suspended on vertical sliding guides 60 and comprising depressing levers 58 which during passage of a slaughtering shackle 32 may be inserted into the slaughtering shackle 32 and which subsequently, as shown in corresponding views on Fig. 13, may be moved downwardly for ensuring that the legs of the broilers are correctly placed in curved bottom ends 62 of the slaughtering shackle 32. The vertical displacing movement of the depressing segments 56, which, as mentioned, are suspended on vertical sliding guides 60, is guided by means of guide rollers 64 engaging guide grooves 66 in a cylinder surface 68. In order to avoid pressure damage on the legs of the broilers, springs 70 are inserted between the guiding part and the active part of the depressing segments 56. The described depressing arrangement may, as indicated, be mounted on a separate wheel which in the transfer position 45 interacts with the intermediate wheel 29.

Finally it is to be noted that the method and/or the apparatus according to the invention may be used in connection with suspension and transfer of poultry to be slaughtered of any kind, i.e. quite independent of whether we are speaking of suspension or transfer of chicken, hens, ducks, geese or turkeys. The method and apparatus are equally suited for suspending and transfer, respectively, of living, slaughtered or stunned animals, including gas or electrically stunned poultry.

## Claims

1. A method for suspending poultry to be slaughtered, particularly live broilers (8), in shackles of an overhead conveyor (22), where the broilers (8), for example by arrival at the poultry slaughtering house, are placed on a belt conveyor (6), by means of which the broilers (8) are delivered upon a rotating, mainly horizontal distributing surface (4,5) and are successively led or pushed outwardly toward a peripheral area of the distributing surface (4,5) which peripheral area has positions arranged to receive a broiler, said broilers being placed with the breast side downward so that their legs project out from the peripheral area, ***characterised* in that** personnel (12) placed along the peripheral area fix the legs of the broilers in special retainer clips (20) of the shackles of the overhead conveyor (22) which run along a section of the peripheral area of the rotating distributing surface (4, 5), and that the broilers subsequently are automatically transferred to slaughtering shackles (32) of a slaughtering line (30).

2. A method according to claim 1, ***characterised* in that** the broilers (8), when they leave the distributing surface (4, 5), e.g. via a downward directing slide-way (24), are guided to vertical, hanging position as the retainer clips (20) are arranged to assume a vertical as well as horizontal position, and that the retainer clips (20) are subsequently and automatically released when the broilers (8), preferably via an intermediate wheel (29), are automatically transferred to the slaughtering shackles of the slaughtering line.

3. A method according to claim 1, ***characterised* in that** the legs of the broilers, by transfer from intermediate wheel (29) to the slaughtering line (30), are actively pushed into the slaughtering shackles (32) when these pass the transfer position.

4. A method according to claim 1, ***characterised* in that** use is made of a stationary, e.g. sheet formed, spiral (10) for successively leading and pushing the broilers outward against the peripheral area of the distributing area (4) of the circular, rotating distributing surface (4).

5. A method according to claim 1, ***characterised* in that** use is made of an elongate, rotating distributing surface (5) with central, stationary means arranged for successively leading and pushing the broilers outward toward the peripheral area of the distributing surface (5).

6. A method according to claim 1, ***characterised* in that** the legs of the broilers, preferably in connection with the transfer from the intermediate wheel to the subsequent processing line, e.g. a slaughtering line, are pushed downward into the slaughtering shackle (32).

7. An apparatus (2) for suspending poultry, particularly broilers, according to the method of claim 1, comprising a rotating distributing surface (4, 5) with a central receiving position for preferably stunned broilers, which are successively supplied via a belt conveyor (6), means adapted for successively pushing broilers outward toward a peripheral area of the distributing surface (4, 5), said distribution surface (4, 5) comprising positions along the peripheral area being adapted for receiving broilers (8) in such a way that they may be placed with the breast side downward and with their legs projecting out from the edge of the peripheral area, ***characterised* in** comprising special retainer clips (20) arranged on shackles of an overhead conveyor (22), at least a part of which in a synchronised way is arranged to closely pass said positions along the peripheral area of the rotating distributing surface (4, 5) for allowing manual fixing of the legs of said broilers in said retainer clips (20), and that said overhead conveyor (22) is adapted to interact with an intermediate wheel (29) of an transfer unit (28) for automatic transfer of the broilers to the slaughtering shackles (32) of a slaughtering line.

8. An apparatus according to claim 7, ***characterised* in that** said retainer clips (20) are hinge connected with the overhead conveyor (22) in such a manner that the retainer clips (20) may assume a vertical position for fixing the legs of broilers (8) lying in a. horizontal position for fixing the legs of broilers (8) hanging vertically down from the overhead conveyor (22) for subsequent automatic transfer via said intermediate wheel (29) to the shackles (32) of said slaughtering lines as there are means for automatic release of the retainer clips (20) in connection with the transfer.

9. An apparatus according to claim 7, ***characterised* in that** said means for successively pushing the broilers outward toward the peripheral area of the rotating distributing surface (4, 5) are constituted by a stationary, preferably sheet formed, spiral (10), the centre of which is disposed about the central receiving position for the broilers (8).

10. An apparatus according to claim 7, ***characterised* in that** said intermediate wheel (29) along its periphery comprises segments with outwardly open recesses for temporary accommodation of the broiler legs and means arranged for actively pushing the legs of the broilers from the intermediate wheel (29) to the shackles (32) of the slaughtering line in a co-ordinated way, and that, preferably in connection with the intermediate wheel (29) there is a pressing down arrangement in connection with the intermediate wheel (29) with the purpose of ensuring that the broiler legs (18) are disposed correctly in position at the bottom of the slaughtering shackle (32).

## Patentansprüche

1. Verfahren zum Aufhängen von zu schlachtendem Geflügel, insbesondere von lebenden Brathühnern (8), in Bügeln einer Überkopf-Fördereinrichtung (22), wobei die Brathühner (8) beispielsweise durch Ankunft bei dem Geflügel-Schlachthaus auf einer Riemen-Fördereinrichtung (6) angeordnet werden, mittels derer die Brathühner (8) auf eine rotierende, hauptsächlich horizontale Verteilungsoberfläche (4, 5) abgegeben werden und nacheinander zu einem Umfangsbereich der Verteilungsoberfläche (4, 5) nach außen geführt oder geschoben werden, wobei der Umfangsbereich Positionen hat, die so angeordnet sind, dass sie ein Brathuhn aufnehmen, wobei die Brathühner mit der Brustseite nach unten angeordnet werden, so dass ihre Beine vom Umfangsbereich nach außen stehen, **dadurch gekennzeichnet, dass** das Personal (12), das längs des Umfangsbereichs positioniert ist, die Beine der Brathühner in speziellen Halteklips (20) der Bügel der Überkopf-Fördereinrichtung (22), die längs eines Abschnitts des Umfangsbereichs der rotierenden Verteilungsoberfläche (4, 5) verlaufen, befestigen und dass die Brathühner anschließend automatisch zu Schlachtbügeln (32) einer Schlachtstrecke (30) befördert werden.

2. Verfahren nach Anspruch 1, **dadurch gekennzeichnet, dass** die Brathühner (8) dann, wenn sie die Verteilungsoberfläche (4, 5) z. B. über eine nach unten gerichtete Gleitbahn (24) verlassen, in eine vertikale Hängeposition geführt werden, wenn die Halteklips (20) so angeordnet sind, dass sie sowohl eine vertikale als auch eine horizontale Position annehmen, und dass die Halteklips (20) anschließend und automatisch gelöst werden, wenn die Brathühner (8), vorzugsweise über ein Zwischenrad (29), automatisch zu den Schlachtbügeln der Schlachtstrecke befördert werden.

3. Verfahren nach Anspruch 1, **dadurch gekennzeichnet, dass** die Beine der Brathühner durch Übertragung von dem Zwischenrad (29) an die Schlachtstrecke (30) aktiv in die Schlachtbügel (32) geschoben werden, wenn sich diese an der Übertragungsposition vorbeibewegen.

4. Verfahren nach Anspruch 1, **dadurch gekennzeichnet, dass** von einer stationären, z. B. blattförmigen Spirale (10) Gebrauch gemacht wird, um die Brathühner nacheinander nach außen zu dem Umfangsbereich des Verteilungsbereichs (4) der kreisförmigen, rotierenden Verteilungsoberfläche (4) zu führen und zu schieben.

5. Verfahren nach Anspruch 1, **dadurch gekennzeichnet, dass** von einer lang gestreckten, rotierenden Verteilungsoberfläche (5) Gebrauch gemacht wird, die mittige, stationäre Mittel besitzt; die so angeordnet sind, dass sie die Brathühner nacheinander nach außen zum Umfangsbereich der Verteilungsoberfläche (5) führen und schieben.

6. Verfahren nach Anspruch 1, **dadurch gekennzeichnet, dass** die Beine der Brathühner, vorzugsweise in Verbindung mit der Übertragung von dem Zwischenrad zu der nachfolgenden Verarbeitungsstrecke, z. B. einer Schlachtstrecke, nach unten in den Schlachtbügel (32) geschoben werden.

7. Vorrichtung (2) zum Aufhängen von Geflügel, insbesondere von Brathühnern, gemäß dem Verfahren nach Anspruch 1, die umfasst: eine rotierende Verteilungsoberfläche (4, 5) mit einer mittigen Aufnahmeposition für vorzugsweise betäubte Brathühner, die nacheinander über eine Riemenfördereinrichtung (6) zugeführt werden, Mittel, die so beschaffen sind, dass sie nacheinander Brathühner nach außen zu einem Umfangsbereich der Verteilungsoberfläche (4, 5) schieben, wobei die Verteilungsoberfläche (4, 5) Positionen längs des Umfangsbereichs aufweist, die so beschaffen sind, dass sie Brathühner (8) in der Weise aufnehmen, dass sie mit der Brustseite nach unten und so, dass ihre Beine von der Kante des Umfangsbereichs nach außen stehen, angeordnet werden können, **gekennzeichnet durch** spezielle Halteklips (20), die an Bügeln einer Überkopf-Fördereinrichtung (22) angeordnet sind, wobei wenigstens ein Teil hiervon so angeordnet ist, dass er sich synchronisiert nahe an den Positionen längs des Umfangsbereichs der rotierenden Verteilungsoberfläche (4, 5) vorbeibewegt, um eine manuelle Befestigung der Beine der Brathühner in den Halteklips (20) zu ermöglichen, und dass die Überkopf-Fördereinrichtung (22) so beschaffen ist, dass sie mit einem Zwischenrad (29) einer Übertragungseinheit (28) zusammenwirkt, um die Brathühner automatisch an die Schlachtbügel (32) einer Schlachtstrecke zu übertragen.

8. Vorrichtung nach Anspruch 7, **dadurch gekennzeichnet, dass** die Halteklips (20) mit der Überkopf-Fördereinrichtung (22) über ein Scharnier verbunden sind, derart, dass die Halteklips (20) eine vertikale Position zum Befestigen der Beine der Brathühner (8), die in einer horizontalen Position liegen, einnehmen können, um die Beine der Brathühner (8), die von der Überkopf-Fördereinrichtung (22) vertikal nach unten hängen, zu befestigen, um sie anschließend über das Zwischenrad (29) automatisch an die Bügel (32) der Schlachtstrecken zu übertragen, wenn Mittel für die automatische Lösung der Halteklips (20) in Verbindung mit der Übertragung vorhanden sind.

9. Vorrichtung nach Anspruch 7, **dadurch gekennzeichnet, dass** die Mittel zum Schieben der Brathühner nacheinander nach außen zum Umfangsbereich der rotierenden Verteilungsoberfläche (4, 5) durch eine stationäre, vorzugsweise blattförmige Spirale (10) gebildet sind, deren Zentrum um die mittige Aufnahmeposition der Brathühner (8) angeordnet ist.

10. Vorrichtung nach Anspruch 7, **dadurch gekennzeichnet, dass** das Zwischenrad (29) längs seines Umfangs Segmente mit nach außen offenen Aussparungen für die vorübergehende Aufnahme der Brathuhnbeine und Mittel, die so angeordnet sind, dass sie die Beine der Brathühner auf koordinierte Weise von dem Zwischenrad (29) automatisch zu den Bügeln (32) der Schlachtstrecke aktiv schieben, umfasst und dass vorzugsweise in Verbindung mit dem Zwischenrad (29) eine Abwärtspressanordnung in Verbindung mit dem Zwischenrad (29) vorhanden ist, um sicherzustellen, dass die Brathuhnbeine (18) korrekt in einer Position am Boden des Schlachtbügels (32) angeordnet werden.

## Revendications

1. Procédé pour suspendre des vollailles à abattre, en particulier des poulets vivants (8), dans des maillons d'attache d'un convoyeur aérien (22), où les poulets (8), par exemple en arrivant à l'abattoir des poulets, sont placés sur un convoyeur à courroie (6), au moyen duquel les poulets (8) sont transmis sur une surface de distribution tournante essentiellement horizontale (4,5) et sont successivement menés ou poussés vers l'extérieur, vers une zone périphérique de la surface de distribution (4,5), ladite zone périphérique a des positions agencées pour recevoir un poulet, lesdits poulets étant placés côté poitrine vers le bas de sorte que leurs pattes dépassent de la zone périphérique, **caractérisé en ce que** le personnel (12) placé le long de la zone périphérique fixe les pattes des poulets dans des pinces de retenue spéciales (20) des maillons du convoyeur aérien (22) qui s'étendent le long d'une section de la zone périphérique de la surface de distribution tournante (4,5), et **en ce que** les poulets sont ensuite automatiquement transférés aux maillons d'abattage (32) d'une chaîne d'abattage (30).

2. Procédé selon la revendication 1, **caractérisé en ce que** les poulets (8), lorsqu'ils quittent la surface de distribution (4,5), par exemple par un chemin de coulissement dirigé vers le bas (24), sont guidés à une position de suspension verticale lorsque les pinces de retenue (20) sont agencées pour occuper une position verticale ainsi qu'horizontale, et **en ce que** les pinces de retenue (20) sont ensuite relâchées automatiquement lorsque les poulets (8), de préférence par une roue intermédiaire (29), sont automatiquement transférés aux maillons d'abattage de la ligne d'abattage.

3. Procédé selon la revendication 1, ***caractérisé* en ce que** les pattes des poulets, par le transfert de la roue intermédiaire (29) à la chaîne d'abattage (30), sont poussées activement dans les maillons d'abattage (32) lorsque ceux-ci passent devant la position de transfert.

4. Procédé selon la revendication 1, **caractérisé en ce qu'**une spirale stationnaire (10), par exemple en tôle, est utilisée pour mener et pousser successivement les poulets vers l'extérieur vers la zone périphérique de la zone de distribution (4) de la surface de distribution circulaire tournante (4).

5. Procédé selon la revendication 1, **caractérisé en ce qu'**une surface de distribution tournante oblongue (5) est utilisée avec des moyens stationnaires centraux agencés pour mener et pousser successivement les poulets vers l'extérieur vers la zone périphérique de la surface de distribution (5).

6. Procédé selon la revendication 1, ***caractérisé* en ce que** les pattes des poulets, de préférence en rapport avec le transfert de la roue intermédiaire à la chaîne de traitement suivante, par exemple une chaîne d'abattage, sont poussées vers le bas dans le maillon d'abattage (32).

7. Appareil (2) pour suspendre des volailles, en particulier des poulets, selon le procédé de la revendication 1, comprenant une surface de distribution tournante (4,5) avec une position de réception centrale pour des poulets, de préférence assommés, qui sont amenés successivement par un convoyeur à courroie (6), des moyens aptes à pousser successivement les poulets vers l'extérieur, vers une zone périphérique de la surface de distribution (4,5), ladite surface de distribution (4,5) comprenant des positions le long de la zone périphérique apte à recevoir les poulets (8) de telle manière qu'ils peuvent être placés avec la poitrine vers le bas et avec leurs pattes faisant saillie du bord de la zone périphérique, **caractérisé en ce qu'**il comprend des pinces de retenue spéciales (20) agencées sur les maillons d'un convoyeur aérien (22), dont au moins une partie est agencée d'une manière synchronisée pour passer à proximité desdites positions le long de la zone périphérique de la surface de distribution tournante (4,5) pour permettre la fixation manuelle des pattes desdits poulets dans lesdites pinces de retenue (20), et **en ce que** ledit convoyeur aérien (22) est apte à interragir avec une roue intermédiaire (29) d'une unité de transfert (28) pour le transfert automatique des poulets aux maillons d'abattage (32) d'une chaîne d'abattage.

8. Appareil selon la revendication 7, ***caractérisé* en ce que** lesdites pinces de retenue (20) sont reliées par une charnière au convoyeur aérien (22) de telle manière que les pinces de retenue (20) peuvent occuper une position verticale pour fixer les pattes des poulets (8) reposant dans une position horizontale pour fixer les pattes des poulets (8) pendant verticalement du convoyeur aérien (22) en 'vue d'un transfert automatique suivant par ladite roue intermédiaire (29) aux maillons (32) desdites chaînes d'abattage étant donné qu'il y a des moyens pour libérer automatiquement les pinces de retenue (20) en rapport avec le transfert.

9. Appareil selon la revendication 7, ***caractérisé* en ce que** lesdits moyens pour pousser successivement les poulets vers l'extérieur, vers la zone périphérique de la surface de distribution tournante (4,5) sont constitués par une spirale stationnaire (10), de préférence en tôle, dont le centre est disposé autour de la position de réception centrale des poulets (8).

10. Appareil selon la revendication 7, ***caractérisé* en ce que** ladite roue intermédiaire (29) le long de sa périphérie comprend des segments avec des évidements ouverts vers l'extérieur pour recevoir temporairement les pattes des poulets, et des moyens agencés pour pousser activement les pattes des poulets de la roue intermédiaire (29) aux maillons (32) de la chaîne d'abattage d'une manière coordonnée, et **en ce que**, de préférence en rapport avec la roue intermédiaire (29), il est réalisé un agencement exerçant une pression vers le bas en rapport avec la roue intermédiaire (29) dans le but d'assurer que les pattes de poulets (18) soient disposées correctement en position au fond du maillon d'abattage (32).
